# EUROPEAN PATENT APPLICATION

(11) **EP 1 562 276 A2**
(43) Date of publication of application: **10.08.2005**
(21) Application number: 05002490.0
(22) Date of filing: 07.02.2005
(51) Int. Cl.: H02K 15/02, H02K 1/14

(54) **Winding topologies for stators in brushless motors**

(30) Priority: 06.02.2004 US 773967
(71) Applicant: Valeo Electrical Systems, Inc., Auburn Hills, Michigan 48326-2356 (US)
(72) Inventor: Kolomeitsev, Sergej, Rochester MI 48306 (US); Suriano, John, Auburn Hills MI 48326 (US)
(74) Representative: Lemaire, Marc

(57) **Abstract**

An improved stator for an electric motor. In one form of the invention, each stator slot in a stator contains only coils of a single phase. Thus, if a short occurs in that coil, no other phase is present in the slot for the short to connect with. In another form of the invention, pre-formed coils are constructed, having hollow cores. Each coil is inserted over a stator tooth, and then additional structure is added to form a rim from which the teeth extend, somewhat like spokes on a wheel.

## Description

The invention concerns various placements of stator coils within multiphase electric motors, particularly of the brushless permanent-magnet type. The invention reduces the risk of electrical shorts between different phases.

### Background of the Invention

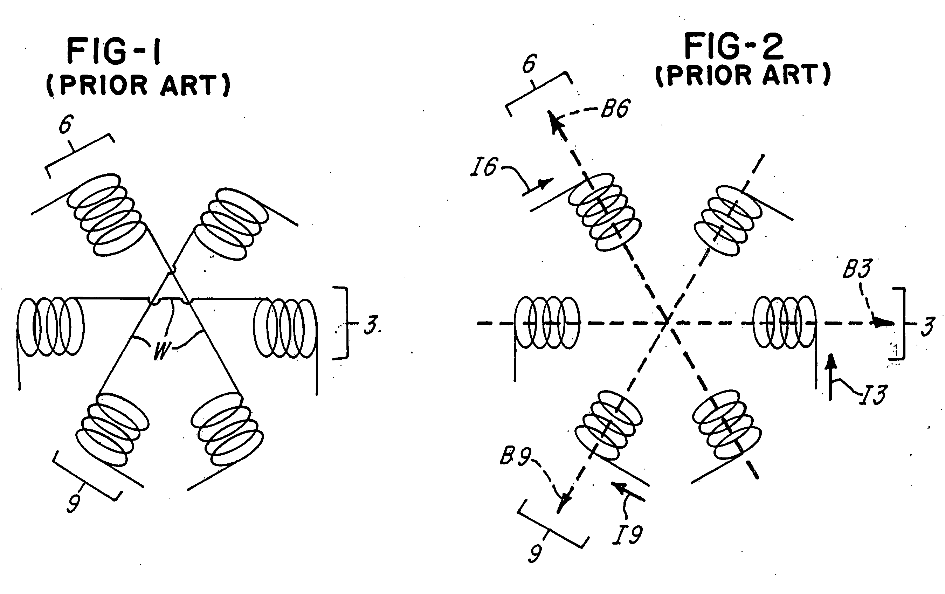

Figure 1 illustrates schematically three stator coils 3, 6, and 9, which are contained in a three-phase synchronous motor (not shown). Figure 2 shows the coils, but with connecting wires W of Figure 1 omitted, to avoid clutter. In Figure 2, currents 13, 16, and 19 are generated in the respective coils. Each current produces a magnetic field B3, B6, and B9, as indicated.

The coils 3, 6, and 9 are physically positioned to be 120 degrees apart, as shown, so that the fields B3, B6, and B9 are also positioned 120 degrees apart physically (as opposed to chronologically). This arrangement allows creation of a magnetic field which rotates in space at a constant speed, if proper currents are generated in the coils, as will now be explained.

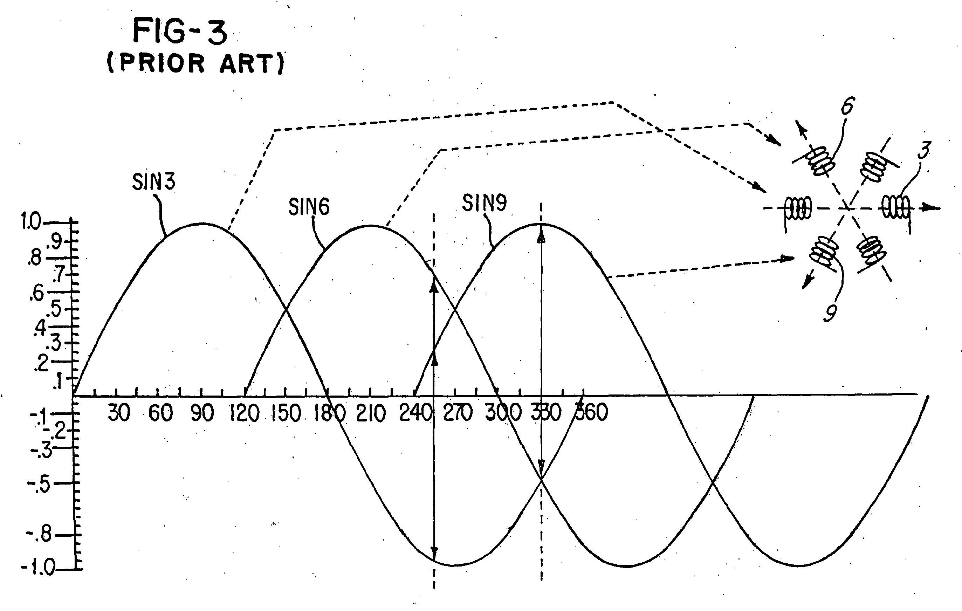

Figure 3 illustrates three-phase currents. The vertical axis on the coordinates runs from negative unity to positive unity for simplicity. In practice, one would multiply the values of unity by the actual peak-to-peak values of the currents being used.

Currents in the form of sine waves SIN3, SIN6, and SIN9 are created respectively in coils 3, 6, and 9, as indicated. The sine waves are separated by 120 chronological, or electrical, degrees. Coil 3 resides at zero physical degrees. SIN3 begins at zero electrical degrees, as indicated on the plot.

Similarly, coil 6 stands at 120 degrees from coil 3. SIN6 begins at 120 degrees, as indicated on the plot. Similarly, coil 9 stands at 240 degrees from coil 3. Correspondingly, SIN9 begins at 240 degrees, as indicated on the plot.

Each coil 3, 6, and 9 produces a magnetic field, as indicated. Those three magnetic fields add vectorially to produce a single magnetic field, which rotates at a constant angular velocity, if the sine waves SIN3, SIN6, and SIN9 have the same peak-to-peak magnitudes, and are exactly 120 degrees apart in phase.

Figure 4 represents the vector sum B of magnetic fields B3, B6, and B9 of Figure 2. Vector B in Figure 4 rotates in the direction of arrow 30.

Figure 5 shows the coils of Figures 1 - 3 superimposed over the rotating vector B. In addition, the rotor ROT of the motor is shown. Rotor ROT contains an apparatus which generates a rotor magnetic field BR. The apparatus may take the form of a permanent magnet PM.

The Inventors have identified problems which can occur if the coils 3, 6, and 9 become short-circuited, and have developed stratagems for preventing these short-circuits.

### OBJECTS OF THE INVENTION

An object of the invention is to provide an improved stator system for an electric motor.

A further object of the invention is to provide a stator topology which reduces likelihood of phase-to-phase shorts in an electric motor.

### SUMMARY OF THE INVENTION

In one form of the invention, a stator for an electric motor contains stator teeth, with slots between adjacent teeth. Some, or all, of the teeth have phase coils wrapped around them, but no slot contains coils for more than one phase. Thus, no short can occur within a slot which shorts one phase to another.

### BRIEF DESCRIPTION OF THE DRAWINGS

Figure 1 illustrates coils in a three-phase motor of the prior art.

Figure 2 illustrates magnetic field vectors generated by the three coils.

Figure 3 illustrates three-phase currents applied to the coils of Figures 1 and 2.

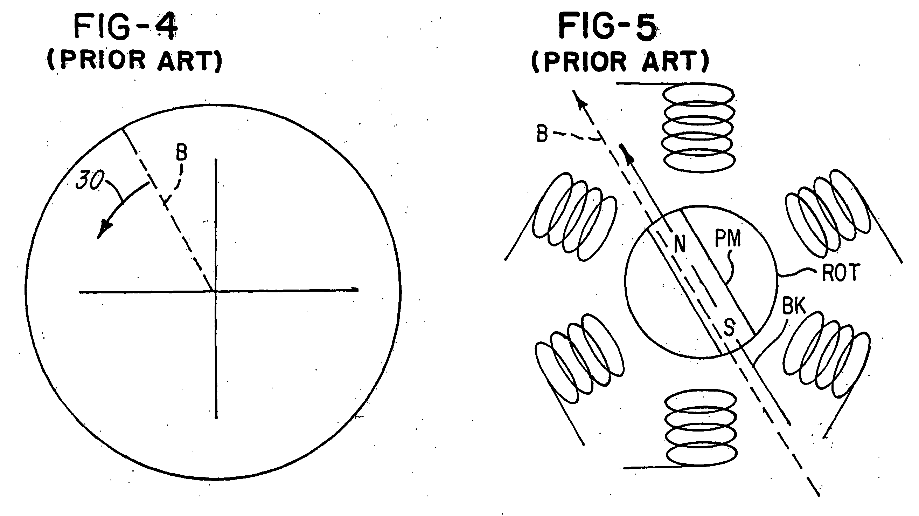

Figure 4 illustrates the rotating vector sum B of the three magnetic fields of Figure 2.

Figure 5 illustrates the coils of Figures 1 - 3 and the rotor of a motor superimposed over Figure 5.

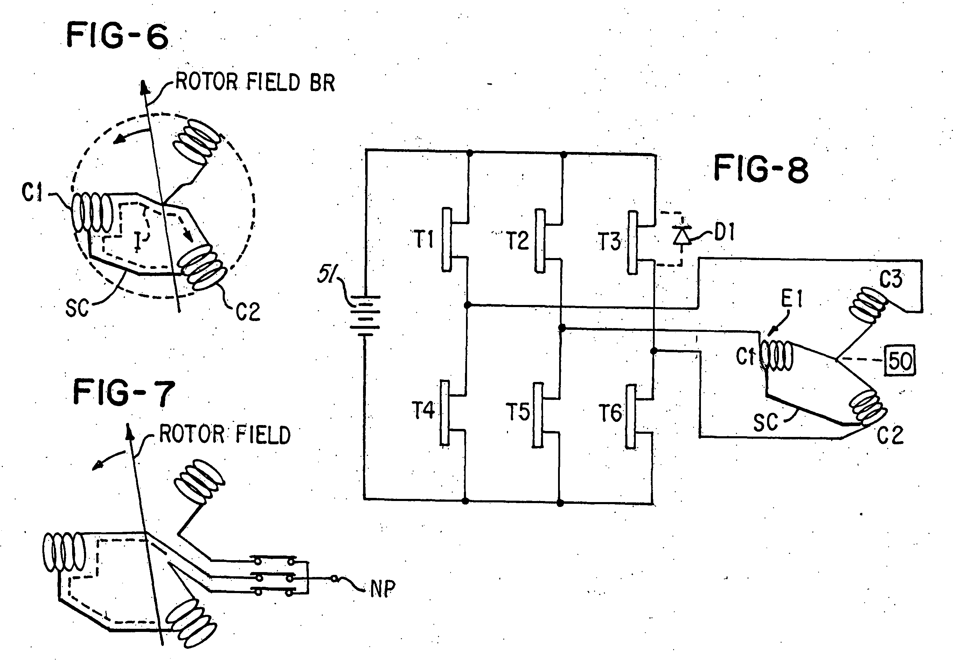

Figure 6 illustrates a possible short circuit SC between two coils C1 and C2.

Figure 7 illustrates a relay 40 which is sometimes opened when the short-circuit of Figure 6 occurs.

Figure 8 illustrates transistor switches commonly used to power the motor coils, and a short circuit between two coils.

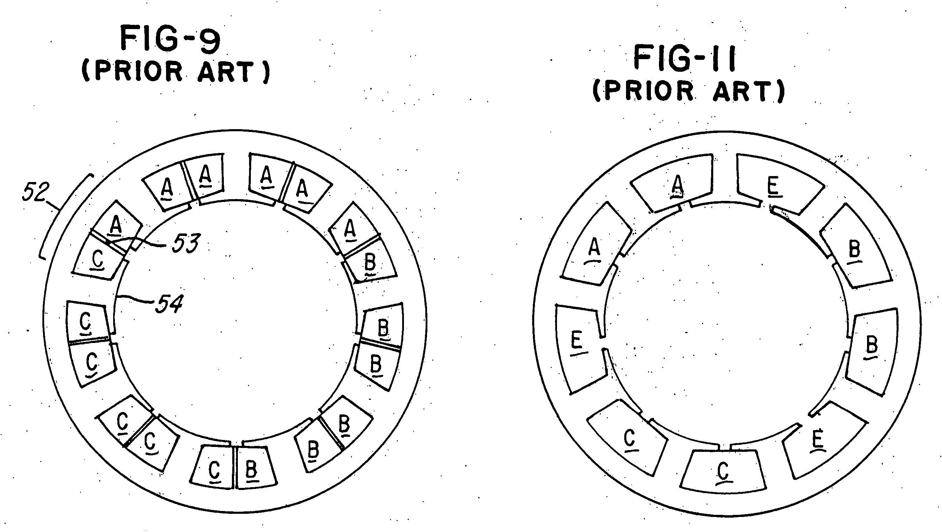

Figure 9 illustrates a stator structure found in the prior art.

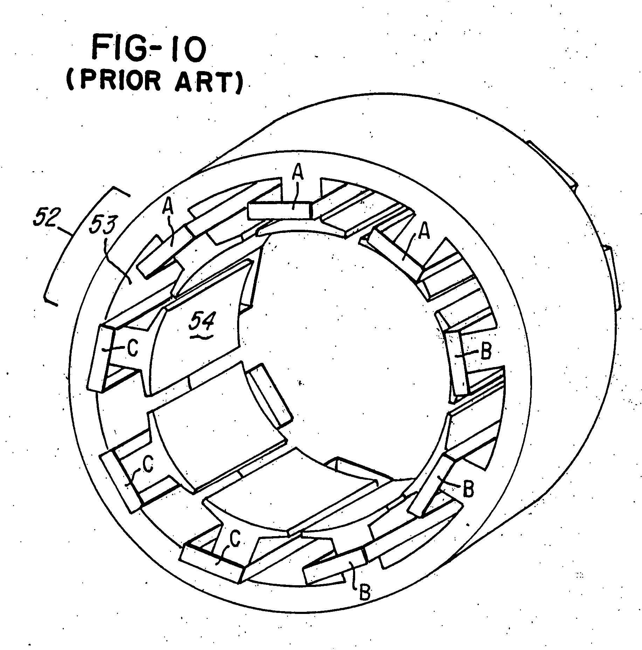

Figure 10 is a perspective schematic rendition of Figure 9.

Figure 11 illustrates one form of the invention.

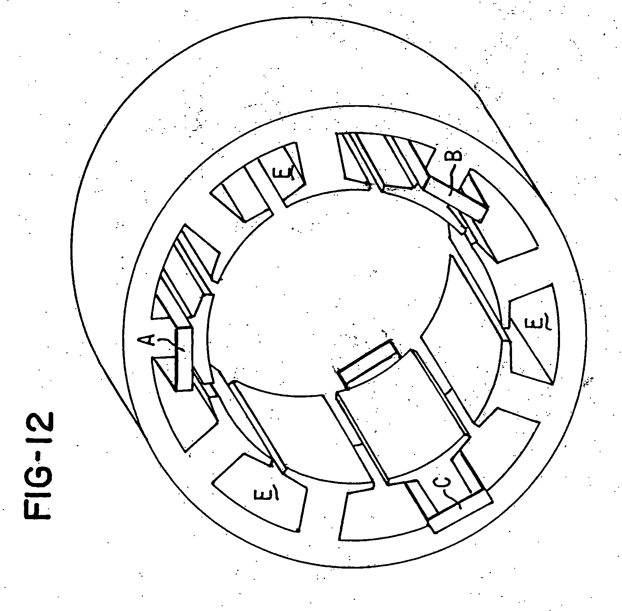

Figure 12 is a perspective schematic rendition of Figure 11.

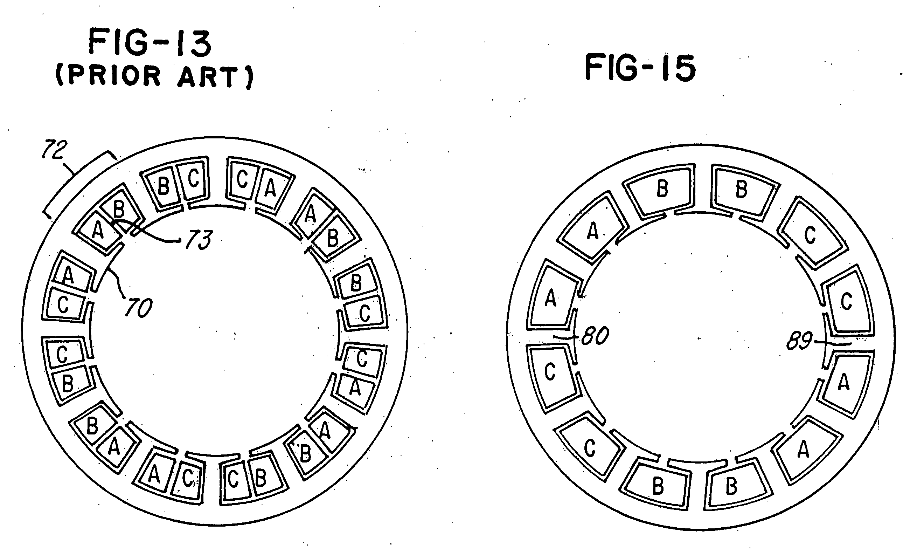

Figure 13 illustrates a stator structure found in the prior art.

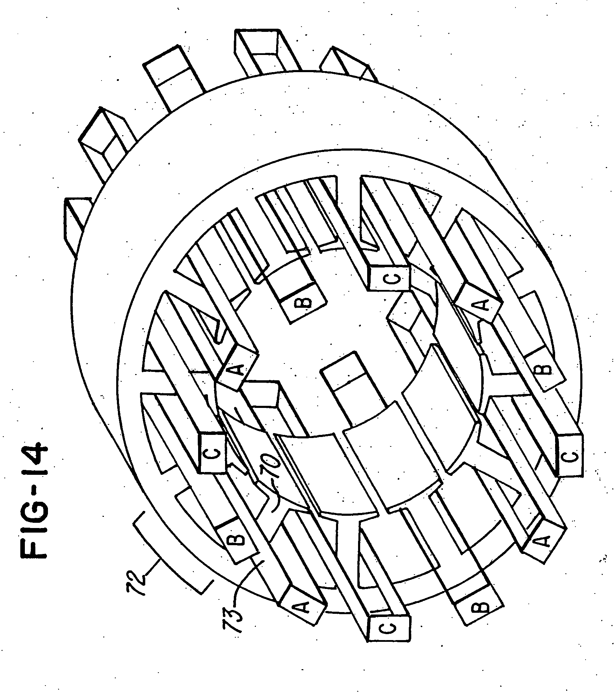

Figure 14 is a perspective schematic rendition of Figure 13.

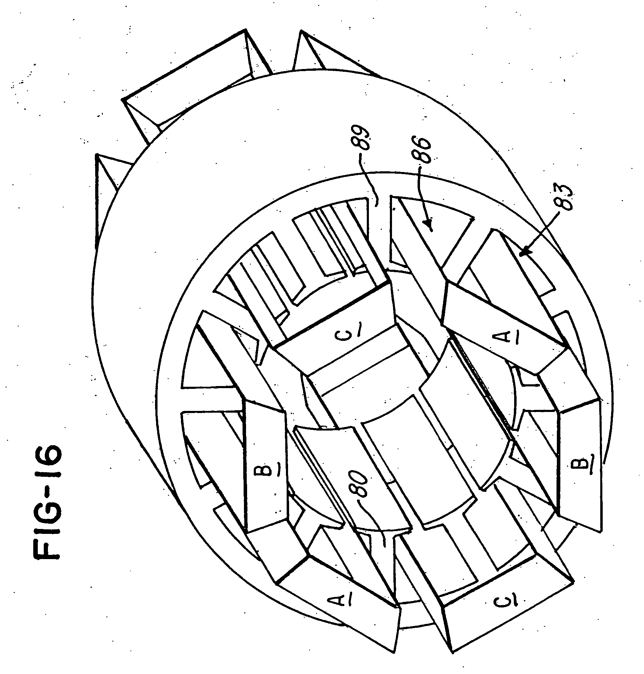

Figure 15 illustrates one form of the invention.

Figure 16 is a perspective schematic rendition of Figure 15.

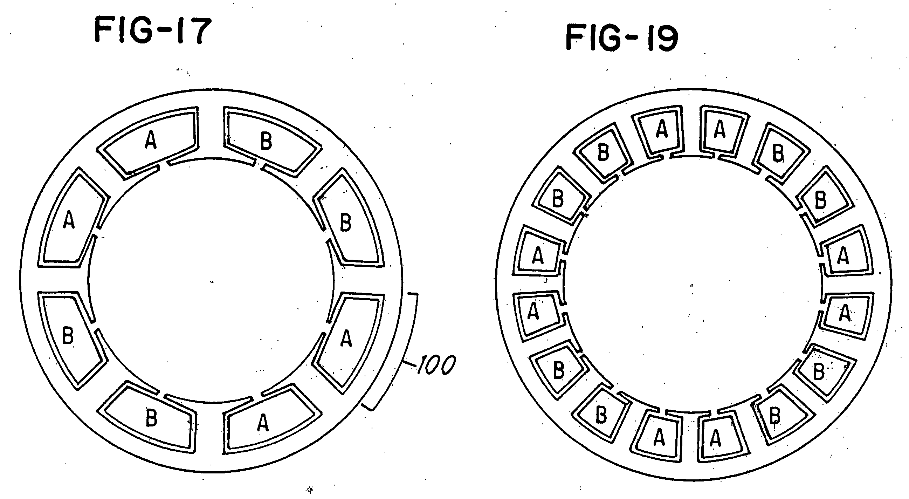

Figure 17 illustrates one form of the invention.

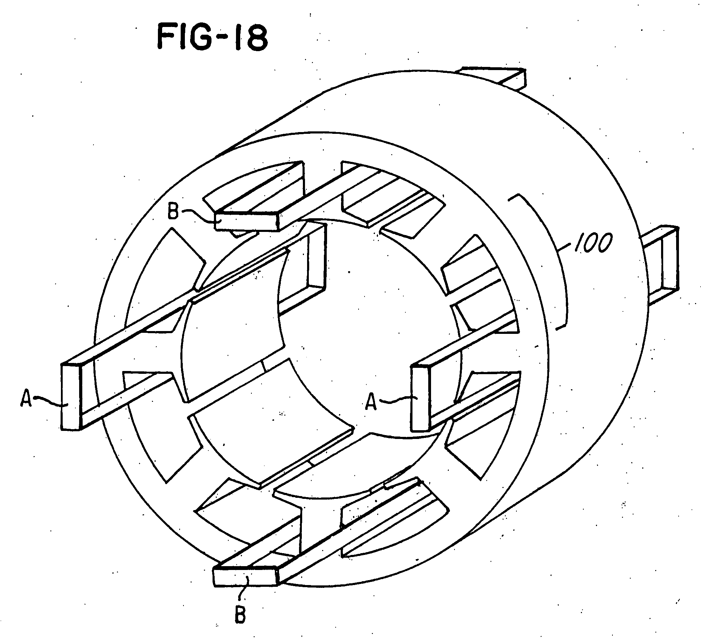

Figure 18 is a perspective schematic rendition of Figure 17.

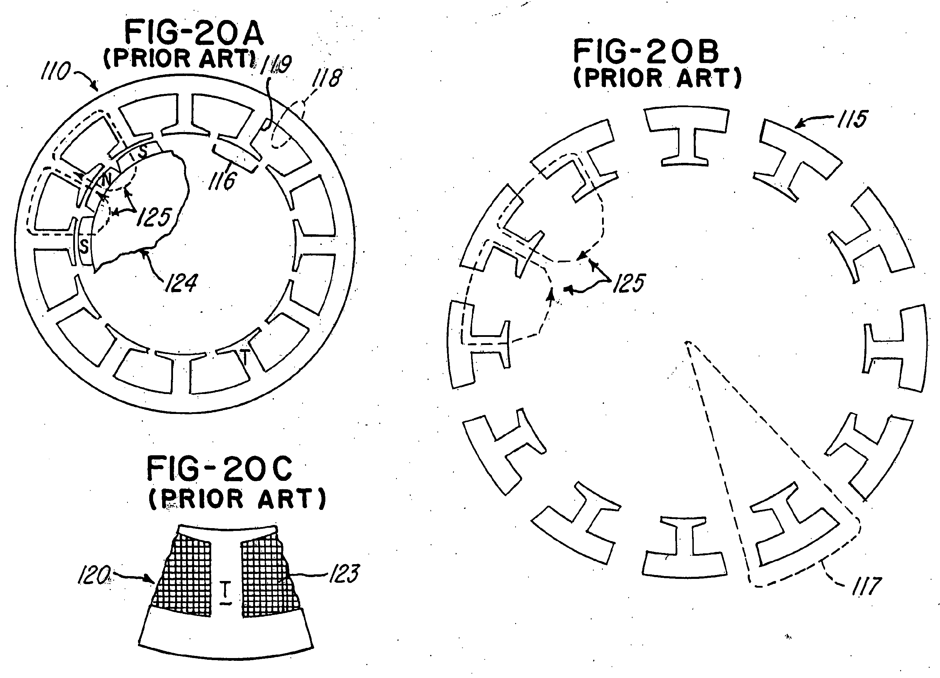

Figure 19 illustrates one form of the invention.

Figure 20 illustrates, in schematic form, the so-called "loose tooth" mode of construction of a stator.

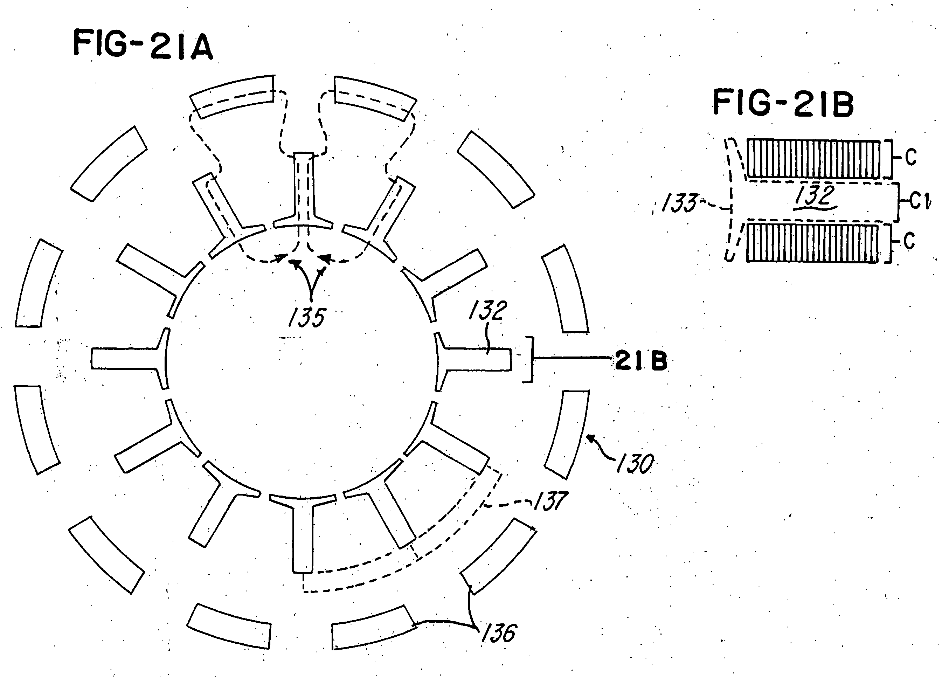

Figures 21, 22, 23, and 24 illustrate forms of the invention which form coils on stator teeth, when removed from the assembled stator.

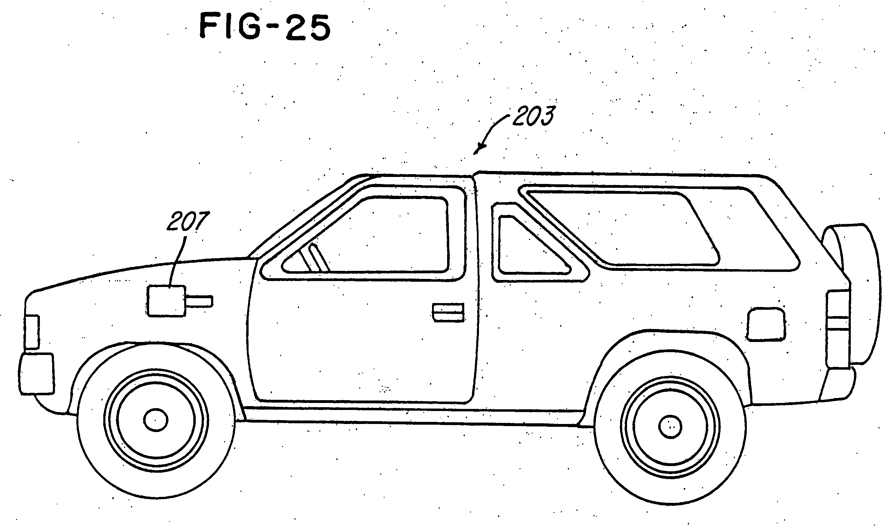

Figure 25 illustrates a vehicle which utilizes motors containing stators described herein.

### DETAILED DESCRIPTION OF THE INVENTION

### Problems Identified

Figure 6 illustrates a short circuit SC between two coils in a motor. The rotor field BR, in swinging past coils C1 and C2, generates voltages in those coils. Those voltages generate a current I. Thus, the motor is acting as a generator, in this respect. The current produces a torque that opposes the motion of the rotor. Each time the rotor field BR swings past the coils C1 and C2, the drag-torque is repeated, and the repetition is perceived as vibration.

Also, the drag reduces the power output of the motor. That is, the current I, in passing through the resistance contained in the coils C1 and C2, produces Joule heating. The energy required for the Joule heating must be supplied by the power delivered to the motor. The rotor, in general, will not produce the same amount of power as previously, because part of the applied energy is now used for the Joule heating.

This loss of power can be significant if the motor represented in Figure 6 is used in a power steering system in a vehicle, and the motor provides power-assist to the driver. When the short in Figure 6 occurs, power-assist is reduced, and the steering wheel of the vehicle becomes more difficult to turn. Additionally, the drag torque is present even when the motor receives no power from the supply. Thus, in the event of a short circuit which necessitates the shut-down of the controller, the driver may experience severe difficulty turning the steering wheel since he must overcome this drag torque.

In addition, since the drag on the rotor occurs when the rotor field BR sweeps past coils C1 and C2, the drag is not constant, but periodic. This periodic drag will be sensed as vibration by the driver.

The motor in question can be equipped with a relay 50, as in Figure 7, which connects all phases to the electrical neutral point NP. This relay is opened when such a short occurs, thereby shutting down the motor and eliminating the drag torque by eliminating the short circuit current.

In addition to causing drag, the short SC in Figure 6 can cause additional problems. Figure 8 illustrates six transistors T1 - T6 which can be used to control currents to the coils C1 - C3 of the motor. The transistors are used to synthesize the sine waves of Figure 3, as known in the art. A battery 51 supplies power. Relay 50 may be present, as in Figure 7

If the short SC occurs close to end E1 of coil 1, and close to the end E2 of coil 2, then those two coils are nearly completely bypassed by the short SC. During conduction of transistor T6, when transistor T2 attempts to enter conduction a near dead short to ground is produced. That short can draw excessive current through transistors T6 and T2, possibly destroying the transistors.

In addition, diodes such as D1 are inherent in the characteristics of each transistor. The short SC may cause unwanted current to pass through the diodes in some circumstances.

### Forms of the Invention

Figure 9 illustrates a prior-art three-phase stator, and Figure 10 is a perspective schematic showing one possible arrangement of the three-dimensional shapes of the coils. It is emphasized that Figure 10 is a schematic, showing primarily positioning of the coils. It does not show the fact that the coils, in general, will be of a sufficiently large cross section to fully occupy the stator slots.

A 9-slot stator is shown, which can be used with an 8-pole or 10-pole rotor. Stator tooth 54 is identified for reference in both Figures. Each square ring in Figure 10 represents a coil, such as coil A.

Due to the need to fully utilize the available slot area, windings are tightly packed into the slots thereby increasing the mechanical pressure between wires. In Figures 9 and 10, within stator slot 52, insulation around coils A and B can degrade, thereby causing coil-coil contact at point 53, causing the problems described above.

The embodiment of Figures 11 and 12 eliminates this problem.

The stator is of the 9-slot type, as in Figures 9 and 10. However, in Figures 11 and 12, only three coils are present, which fill only six of the slots. The slots labeled E are empty.

Since empty slots represent inefficiency, other embodiments may be preferred.

Figures 13 and 14 illustrate a twelve-slot stator, which can be used with an eight-pole or ten-pole rotor. Stator tooth 70 is marked for reference. Coils A and B, which share slot 72, can make contact at point 73, and become shorted.

Figures 15 and 16 show an embodiment which eliminates this problem. A twelve-slot stator is used, as in Figures 13 and 14. However, no coils share a common stator slot. For example, slots 83 and 86 are occupied by a single coil, coil A, which is one half of the phase comprising that coil A and the coil A 180 degrees opposite.

From another point of view, different coils are separated by a stator tooth, such as tooth 89 in Figures 15 and 16. It may be thought that coils A and C, which both abut tooth 89, could both become shorted to that tooth, and thereby become shorted to each other.

However, such an occurrence is considered unlikely. The two coils, for purposes of failure analysis, are considered independent entities. It is considered unlikely that insulation, on two independent entities will fail at the same time, and same place. This situation is to be distinguished from that of Figures 13 and 14, for example. In those Figures, insulation of two coils can make contact at point 73. Thus, vibration can abrade away insulation at a common point. The two coils are not treated as independent entities, for statistical purposes. Additionally, insulation is placed between the stator tooth 89 and the coils for phases A and C, adding additional redundancy.

The preceding discussion considered three-phase motors. The invention is also applicable to two-phase motors.

Figures 17 and 18 illustrate an eight-slot stator, which can be used with a six-pole rotor. Again, no slot, such as slot 100, contains more than one coil, or more than one phase. Figure 19 illustrates a sixteen-slot stator, which can be used with a twelve-pole rotor.

Loose-Tooth Coil Winding

Figure 20 is a schematic conceptualization of a so called "loose tooth" winding which is used to simplify stator construction. Image 110 illustrates a stator. As is well known, the stator is constructed of laminations, in order to reduce eddy-current losses. Loose tooth assembly is a technique which is useful for the construction of multiple phase per slot windings such as those shown in Figures 9 and 13 for example, as long as each coil is wound around a single tooth. It is also useful for single phase per slot windings such as Figures 11, 15, 17, and 19.

In concept, the stator is broken into sectors, as indicated in image 115. Wedge 117 represents one sector. Then, as in image 120, wire 123 is wrapped around each tooth T. The sectors are then re-assembled into the form indicated in image 110. The assembly includes a peripheral, or circumferential, rim 118, bearing a radial array of teeth 119. Each tooth bears a pole face 116.

In general, magnetic flux from the coil wound on each tooth and magnetic flux from the permanent magnets on rotor 124 passing through each tooth must pass through the stator yoke 118 as it completes its circuit illustrated by parallel magnetic flux paths 125. When the stator is split into sections 117, the magnetic flux path must pass through a single break in the yoke 118 in each of the paths 125.

This process of loose-tooth winding reduces some of the difficulty of threading wire around a tooth such as tooth TT in image 110, while the stator is intact. However, the procedure of Figure 20 creates its own problems. One problem results from the fact that each sector in image 115 is actually a stack of lamina. It can be difficult to wind wire 123 around such a stack of lamina even if locked together by mechanical means or by welding, without accidentally breaking them apart in the winding process.

Other problems exist in loose-tooth winding, which will not be detailed here.

Figure 21 illustrates another approach. Stator 130 is broken into the pieces indicated. For each tooth 132, a coil C is wound at a different location, as on a mandrel (not shown) having a cross sectional size and shape slightly larger than that of tooth 132. The mandrel forms a hollow core CO in the coil. Then the coil C is slid onto tooth 132, and the process is repeated for each tooth. Then the pieces of the stator 130 are re-assembled into an intact stator with insulation placed between the coil C and the tooth 32.

However, the assembly process of Figure 21 results in a degradation of the magnetic field paths. For example, the magnetic field path 135 (shown with its connections once the exploded view of Figure 21 is assembled) must pass through two breaks in the yoke of the stator. As is well known, the magnetic field path must form a continuous loop, which closes on itself. Each break represents a reluctance to the magnetic path which can diminish performance and affect cogging torque, the torque ripple which occurs due to permanent magnets and the reluctance of the permanent magnet path. Thus the method of Figure 21, while superior to that of Figure 20 for winding convenience, is inferior for the magnetic performance.

For conventional winding arrangements with multiple phases per slot shown in Figures 9 and 13 for example, an assembly technique such as Figure 21 which breaks out each tooth separately is required if the coils are to be wound on tooling and placed as units onto the stator teeth. This is because for the windings such as exemplified in Figures 9 and 13 there is a coil on each tooth of the motor.

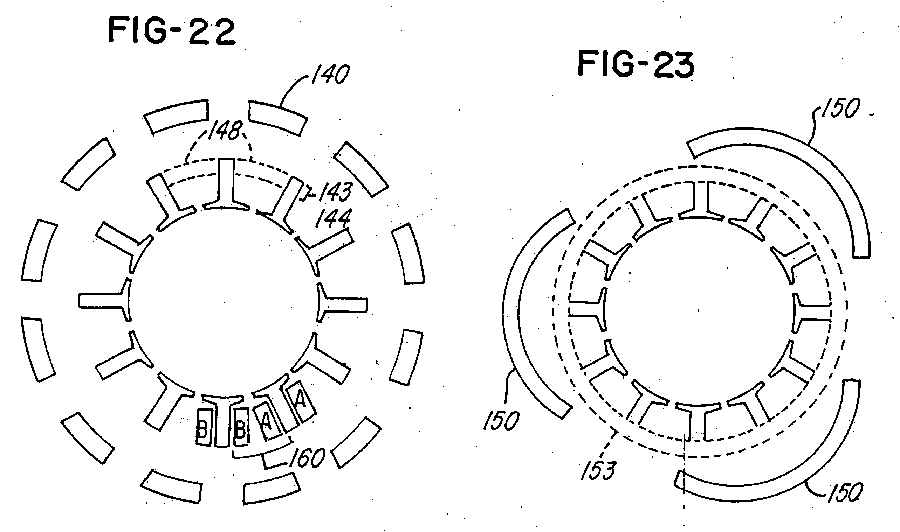

Figures 22 and 23 conceptually illustrate two different approaches to splitting the stator into pieces while allowing a coil to be assembled onto each tooth. In Figure 21, it was assumed that the segments 136, by themselves, form the rim of the stator, as indicated by phantom segments 137. In Figure 22, the segments 140, together with the radially outer ends 143 of the teeth 144, form the rim of the stator. Segments 140 fit between the ends 143, as indicated by phantom segments 148.

Figure 23 can be viewed as showing a variation of Figure 21. In the latter, one segment 136 is generated for each tooth. In Figure 23, three segments 150 are generated, which together form the rim 153 of the stator. These preceding loose-tooth approaches are applicable to the prior art situation of, for example, Figures 13 and 14. That is, coils A and B in Figure 22 would share slot 160.

The preceding loose-tooth approach is also applicable to the embodiments of the invention discussed above shown in Figures 11, 15, 17, and 19 for example. For example, coils can be wound around some teeth, and not others, to produce the configuration of Figures 17 and 18, after the stator is re-assembled. However, the techniques of Figures 22 and 23 require each magnetic flux path to pass through two breaks in the stator rather than one as in the method of Figure 20.

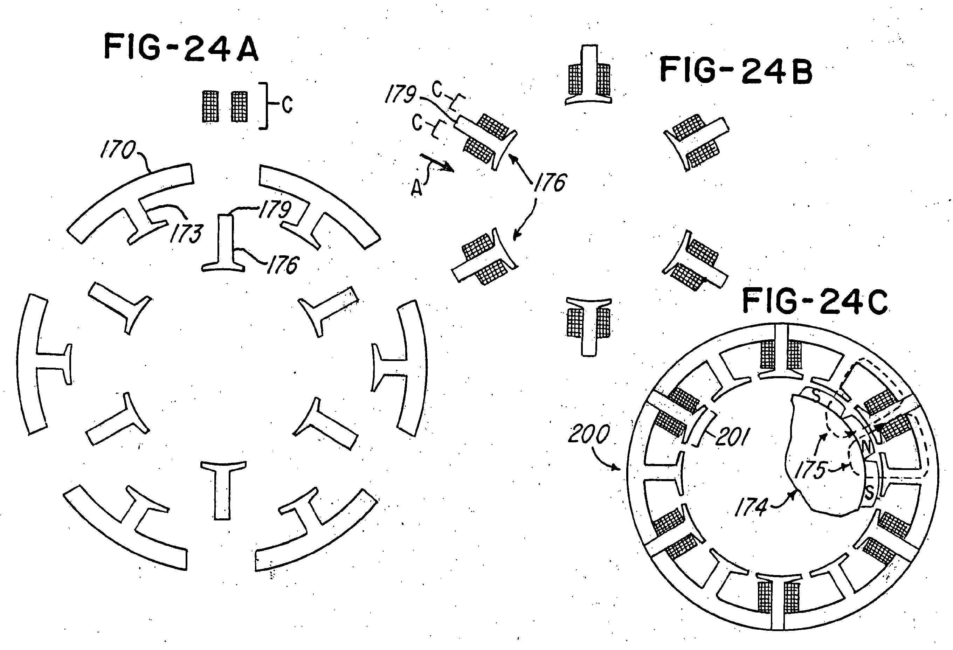

Another type of loose-tooth approach is particularly suited to the embodiments of Figures 11, 15, 17, 18, and 19 for example. In Figure 24, the stator is constructed of two types of parts. One type includes rim sections 170 which contain a tooth 173. The other type is a tooth section 176, having a free end 179, over which a coil can slide.

Coils C are wound, separate from the tooth sections 176. The coils C are then inserted over the teeth 176, from the radially outer direction, over ends 179, as indicated by arrow A. Pole faces 201 retain the coils C: the hollow cores are not large enough to fit over the pole faces 201. Then the tooth sections 176, now bearing coils C, are assembled with rim sections 170, to form the stator 200. Such construction can not be used with conventional windings in which multiple phases share slots as shown in Figures 9 and 13 for example since a coil must be placed on each stator tooth.

The use of construction of Figure 24 offers improvement in the magnetic circuit paths. The parallel magnetic flux paths from rotor 174 for a single coil are shown by 175 in Figure 24. As can be seen, the paths must only traverse a single break in the stator iron as opposed to the two breaks of the techniques in Figures 21, 22, and 23. Thus the technique of Figure 24 combined with the single phase per slot winding exemplified in Figures 11, 15, 17, and 19 allows the simplified coil assembly benefits of Figures 21, 22, and 23 with the improved magnetic circuit of Figure 20.

Figure 25 illustrates one form of the invention. A motor vehicle 203 contains one or more electric motors 207, such as motors which operate power steering, power brakes, windshield wipers, and so on. One or more of the motors utilize the winding arrangements described herein. Also, the motors can be assembled using procedures described herein, and then installed into the vehicle.

### Additional Considerations

A stator tooth can be defined as a body lying on a radius of a motor, which acts as a magnetic core for a coil of wire which is wound around the body. A radial array of such bodies is often provided. The bodies, or teeth, are generally separate at their radially inner ends, such as ends EE in Figure 12. The bodies are often connected to a common ring at their radially outer ends, as in Figure 12. Other definitions are possible.

Numerous substitutions and modifications can be undertaken without departing from the true spirit and scope of the invention. What is desired to be secured by Letters Patent is the invention as defined in the following claims.

## Claims

1. A stator for an electric motor, comprising:
a) a radial array of 2N teeth, definable as 1, 2, 3, to 2N;
b) N coils, one wound around each even tooth; and
c) no coil wound around any odd tooth.

2. A stator for an electric motor, comprising:
a) a first group of stator teeth, each
i) acting as magnetic core for a single coil wound around it; and
ii) carrying substantially all magnetic flux of the coil wound around it;
b) a second group of stator teeth, having no coils wound around them.

3. Stator according to claim 2, wherein slots are present between adjacent teeth, and some slots contain no coils.

4. A stator for an electric motor, comprising:
a) a radial array of stator teeth, separated by stator slots; and
b) phase coils encircling at least some stator teeth, wherein no slot contains coils from more than one phase.

5. Stator according to claim 4, wherein the radial array of stator teeth comprises at least two teeth.

6. Apparatus, comprising:
a) a stator for an electric motor, comprising coil slots; and
b) in any slot, no coils from more than a single phase.

7. Apparatus, comprising:
a) a stator for an electric motor, comprising coil slots;
b) a rotor;
c) coils in respective slots,
wherein all currents in any slot are in-phase.

8. Apparatus according to daim 7, wherein no currents in any slot have different phases.

9. Apparatus according to claim 1, and further comprising a motor vehicle which powers the motor.

10. Apparatus according to claim 5, and further comprising a motor vehicle which powers the motor.

11. Apparatus according to claim 7, and further comprising a motor vehicle which powers the motor.

12. A stator for an electric motor, comprising:
a) an outer rim;
b) stator teeth extending radially inward from the rim;
c) breaks in the stator, which allow
i) individual stator teeth to be removed from the stator; and
ii) a pre-formed coil to be mounted onto selected stator teeth.

13. A stator for an electric motor, comprising:
a) a radial array of stator teeth, with a stator slot present between adjacent pairs of teeth;
b) a rim surrounding the teeth; and
c) breaks in the rim, teeth, or both, which allow
i) individual teeth to be separated from the stator and
ii) a pre-formed coil to be inserted onto selected individual teeth.

14. Stator according to claim 13, wherein structural configuration of the removed stator teeth does not require deformation of the pre-formed coil during mounting.

15. Stator according to claim 13, wherein structural configuration of the removed stator teeth does not require deformation of the pre-formed coil during insertion.

16. A collection of parts for constructing a stator for an electric motor, comprising:
a) a plurality of pre-formed coils;
b) a first set of stator teeth having radially outer ends which fit into the pre-formed coils; and
c) a second set of stator teeth, each having a segment of a rim mounted thereon.

17. Collection according to claim 16, wherein a radial array of stator teeth connected to an outer rim is generated when
i) the first set of stator teeth is positioned in odd-numbered sectors of a circle, and
ii) the second set of stator teeth is positioned in even-numbered sectors of the circle.

18. Collection according to claim 17, wherein the segments of the rim collectively form a circular periphery of the stator.

19. Collection according to claim 17, wherein the segments of the rim, together with radially outer sections of stator teeth in the first set, collectively form a circular periphery of the stator.

20. A stator for an electric motor, comprising:
a) a radial array of stator teeth, extending inwardly from a circumferential rim;
b) breaks in the rim, teeth, or both, which allow
i) individual teeth to be separated from the stator and
ii) a pre-formed coil to be inserted onto selected individual teeth.

21. Stator according to claim 20, wherein parts of the rim are connected to some teeth when removed, preventing insertion of pre-formed coils onto such teeth.

22. A stator for an electric motor, comprising:
a) an outer rim;
b) stator teeth extending radially inward from the rim;
c) breaks in the rim, which define the stator teeth into two groups wherein:
i) in one group, each tooth has a radially outward end over which a stator coil can be inserted;
ii) in the second group, each tooth has a radially outward end connected to a segment of the circular rim.

23. Stator according to claim 22, and further comprising
d) coils around teeth in the first group; and
e) no coils around any teeth in the second group.

24. Stator according to claim 22, wherein every tooth bears a pole face on its radially inward end.

25. A method of constructing a stator for an electric motor, comprising:
a) forming coils, each having a hollow core;
b) placing a stator tooth in the hollow core of each coil;
c) connecting ends of the stator teeth with arcuate segments to thereby form a circular rim having coil-bearing stator teeth extending radially inward therefrom.

26. Method according to claim 25, wherein each stator tooth has a pole face on one end.

27. Method according to claim 25, wherein the pole face blocks removal of a coil past the pole face.

28. A method of constructing a stator for an electric motor, comprising:
a) forming N coils, each having a hollow core;
b) providing a radial array of 2N stator teeth such that
i) teeth in odd-numbered positions are surrounded by coils; and
ii) teeth in even-numbered positions are surrounded by no coils.

29. A method of constructing a stator for an electric motor, comprising:
a) forming a group of generally T-shaped structures, each comprising a stem and a bar, with
i) the bar being arcuate, and
ii) the stem located on the concave side of the arcuate bar;
b) forming a group of N stator teeth, each having a radially outward end;
c) forming N coils, each having a hollow core;
d) placing one stator tooth into the hollow core of each stator tooth;
e) placing no coils on any stems;
f) assembling the T-shaped structures, the N coils, and the N stator teeth into a stator.

30. Method according to claim 29, and further comprising placing the stator into a motor vehicle.

31. Apparatus according to claim 1, wherein the coils provide multiple phases.

32. Method of constructing a stator for an electric motor, comprising:
a) inserting pre-wound coils, each having a core, onto stator teeth carried by stator sections;
b) assembling the stator sections into a stator, wherein
i) junctions between stator sections are present, and
ii) a continuous loop exists around at least one coil, which loop (1) passes through said core and (2) crosses no more than a single junction.

33. Method according to daim 32, wherein a continuous loop exists around every coil, which loop (1) passes through said core and (2) crosses no more than a single junction.

34. Method of constructing a stator for an electric motor, comprising:
c) inserting pre-wound coils, each having a core, onto stator teeth carried by stator sections;
d) assembling the stator sections into a stator, wherein
i) junctions are present between stator sections, and
ii) a path exists for flux lines generated by a coil to follow, which path crosses only one junction.

35. Method according to claim 34, wherein a path exists for every coil, which flux lines can follow, and which crosses only a single junction.

36. Apparatus, comprising:
e) a collection of coils;
f) a group of parts which, together with some of the coils, can be assembled into stators for electric motors, which have coils mounted on stator teeth,
wherein (1) junctions exist in the stator, between adjacent parts, and (2) for at least one coil, a path exists which crosses no more than one junction, which flux lines generated by the coil can follow.

37. Apparatus according to claim 36, wherein a path crossing no more than a single junction is available for magnetic flux lines generated by every coil.
